# FASCICULE DE BREVET EUROPEEN

(11) **EP 2 187 321 B1**
(45) Date de publication et mention de la délivrance du brevet: **12.09.2018**
(21) Numéro de dépôt: 09175584.3
(22) Date de dépôt: 10.11.2009
(51) Int. Cl.: G06F 17/30

(54) **PROCÉDÉ ET DISPOSITIF D'ÉDITION D'UN OBJET REPRÉSENTÉ DANS UNE PAGE WEB**
VERFAHREN UND SYSTEM ZUR EDITIERUNG EINES IN EINER WEBSEITE DARGESTELLTEN OBJEKTS
METHOD AND SYSTEM FOR EDITING AN OBJECT REPRESENTED ON A WEB PAGE

(30) Priorité: 13.11.2008 FR 0857717
(43) Date de publication de la demande: 19.05.2010
(73) Titulaire: Orange, 75015 Paris (FR)
(72) Inventeur: Brun, Alain, 38450, LE GUA - VIF (FR); Wajsberg, Julien, 92320, CHÂTILLON (FR); Salibi, Samir, 92500, RUEIL-MALMAISON (FR)

(56) Documents cités:
- WO-A-2008/067621
- YOSHIKI OHSHIMA ET AL: "TinLizzieWysiWiki andWikiPhone: Alternative approaches to asynchronous and synchronous collaboration on the Web" CREATING, CONNECTING AND COLLABORATING THROUGH COMPUTING, 2007. C5 &AP OS;07. THE FIFTH INTERNATIONAL CONFERENCE ON, IEEE, PI, 1 janvier 2007 (2007-01-01), pages 36-46, XP002527933 ISBN: 978-0-7695-2806-9
- SABINE CIKIC ET AL: "Concepts for Cooperative Knowledge Spaces in Mathematics and Natural Sciences" CYBERWORLDS, 2006. CW '06. INTERNATIONAL CONFERENCE ON, IEEE, PI, 1 novembre 2006 (2006-11-01), pages 99-106, XP031030565 ISBN: 978-0-7695-2671-3

## Description

L'invention concerne le domaine des télécommunications et plus particulièrement, un procédé et dispositif d'édition d'un objet représenté dans une page Web accessible via une application cliente connectée à un serveur.

Avec l'apparition des technologies dites Web 2.0, les internautes deviennent actifs sur l'Internet, en ce qu'ils sont susceptible de contribuer, grâce à des outils logiciels appropriés, à l'enrichissement d'un contenu accessible via les sites Internet.

Un "Wiki" est une page Web éditable. Un site Wiki comprend au moins une page Web éditable. Un logiciel Wiki permet aux utilisateurs de créer, modifier, supprimer et publier le contenu d'un article sous forme de texte et de rajouter des liens vers d'autres articles pertinents. Ce logiciel permet donc aux internautes de collaborer à l'écriture d'un texte.

Avec les logiciels Wiki disponibles, il est également possible de créer ou modifier un tableau comprenant du texte ou d'enrichir le contenu par insertion d'une image ou objet graphique (par exemple diagramme, image vectorielle, représentation graphique d'un contenu sonore, etc) ou insertion d'un lien hypertexte vers un tel objet.

S'il est aussi possible de faire référence à un objet graphique, il n'est cependant pas possible de modifier un tel objet graphique au moyen d'un simple navigateur Internet: la seule solution consiste à enregistrer une version de cet objet graphique, de la modifier au moyen d'un outil logiciel adapté au format de fichier utilisé pour représenter cet objet, d'enregistrer cet objet graphique après modification puis de mettre à jour le site Wiki par téléchargement de l'objet graphique modifié. Ces opérations sont donc fastidieuses et souvent mal maîtrisées par un utilisateur non averti.

En outre, cette solution ne fonctionne que si le terminal de l'utilisateur est équipé d'un logiciel permettant d'éditer l'objet graphique dans le format dans lequel il est disponible.

Il apparaît donc un besoin pour une solution technique permettant aux membres d'une communauté de partager des pages via un site Wiki, avec possibilités de création, édition, gestion et publication d'un objet multimédia contenu dans ces pages, notamment d'un objet graphique.

Le document intitulé « TinLizzie WysiWiki and WikiPhone : Alternative approaches to asynchronous and synchronous collaboration on the Web », des auteurs Yoshiki Ohshima et al. (Fifth International Conférence on Creating Connecting and Collaborating through Computing, IEEE 2007) décrit un outil logiciel permettant l'édition d'un objet graphique au moyen d'un script après installation d'un plugin Web de navigateur.

Un des buts de l'invention est de remédier à des problèmes et inconvénients de l'état de la technique et/ou d'y apporter des améliorations.

L'invention concerne un procédé d'édition selon la revendication 1.

Selon l'invention, des fonctions d'éditions propres à une catégorie d'objet sont conçues pour l'édition d'un objet multimédia appartenant à cette catégorie de manière à pouvoir être exécutée par l'application utilisée pour naviguer sur le site Web. En outre, les données sont transmises à travers la liaison établie pour naviguer sur le site Web.

Les instructions étant conçues pour être exécutées par ladite application, le processus d'édition d'un objet à partir de sa représentation graphique peut être entièrement intégré dans une application de navigation, de type navigateur Web, notamment en respectant les mécanismes de requêtes et protocoles de communication propres à ce type d'application.

Selon un mode de réalisation, le procédé selon l'invention comprend une étape de réception via ladite liaison, par le serveur en provenance de l'application, de deuxièmes données de description relatives audit objet et générées au moyen desdites instructions de programme suite à une exécution d'au moins une fonction d'édition dudit objet déclenchée par un utilisateur dudit terminal. De cette manière, une mise à jour d'une description de l'objet mémorisée par ledit serveur est prise en charge par l'application et ne nécessite pas d'intervention de l'utilisateur.

Selon un mode de réalisation, le procédé selon l'invention comprend une étape d'identification d'une catégorie d'objet à laquelle ledit objet appartient à partir d'une identification de catégorie mémorisée en association avec lesdites données descriptives, un jeu d'instructions de programme propre à la catégorie d'objet identifiée étant transmis lors de ladite étape d'envoi.

La prise en compte et la gestion, par le serveur, de la catégorie d'un objet permet de traiter chaque catégorie d'objet de manière adaptée à cette catégorie; en particulier le jeu d'instructions de programmes transmis est propre à une catégorie d'objet et ainsi conçu pour permettre l'édition d'un objet de cette catégorie. Il n'est donc pas nécessaire que l'utilisateur recherche par lui-même un logiciel capable d'éditer un tel objet: les fonctions d'éditions sont automatiquement sélectionnées et fournies par le serveur sur la base de la catégorie d'objet mémorisée.

L'invention concerne également un serveur pour la mise en oeuvre d'un procédé d'édition selon la revendication 7.

Les avantages énoncés pour le procédé selon l'invention sont transposables directement au dispositif selon l'invention.

L'invention concerne également un procédé d'édition d'un objet représenté dans une page d'un site Web, le procédé comprenant,
- une étape d'établissement, entre un serveur et une application mise en oeuvre par un terminal, d'une liaison de communication pour une navigation sur ledit site Web,
- une étape d'envoi, par le serveur à destination de ladite application, via ladite liaison,
   - de premières données de description dudit objet pour un affichage d'une représentation dudit objet dans une interface utilisateur de ladite application et
   - d'un jeu d'instructions de programme, propre à une catégorie d'objet à laquelle ledit objet appartient, lesdites instructions étant conçues pour une exécution par ladite application de fonctions d'édition dudit objet entrainant une modification de ladite représentation,
- une étape de réception via ladite liaison, par le serveur en provenance de l'application, de deuxièmes données de description relatives audit objet et générées au moyen desdites instructions de programme suite à une exécution d'au moins une fonction d'édition dudit objet déclenchée par un utilisateur dudit terminal.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel qu'à un composant matériel ou encore à un composant matériel programmable, avec ou sans processeur intégré. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit pour le module concerné. De la même manière, un composant matériel correspond à tout élément d'un ensemble matériel (ou hardware) apte à mettre en oeuvre une fonction ou un ensemble de fonctions, selon ce qui est décrit pour le module concerné.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système d'édition d'un objet de type texte connu dans l'état de la technique;
- la figure 2 représente de manière schématique un système d'édition d'objet intégrant un dispositif selon l'invention;
- la figure 3 représente un organigramme d'un mode de réalisation d'un procédé selon l'invention;
- la figure 4 représente des interfaces utilisateurs utilisées dans un mode de réalisation du procédé selon l'invention.

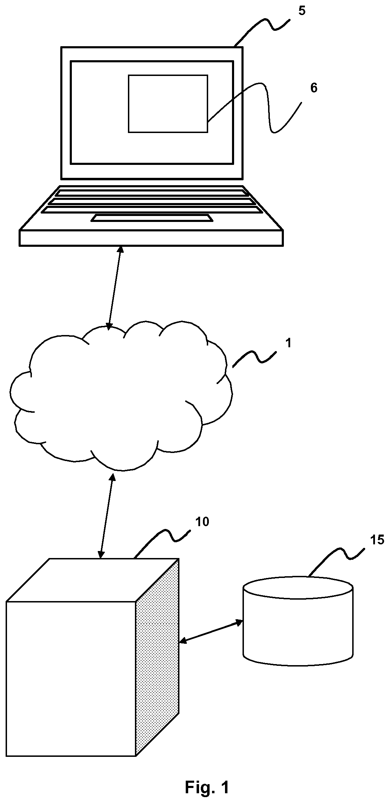

La figure 1 représente de manière schématique un système de télécommunication mettant en oeuvre un site Wiki selon l'état de la technique.

Ce système comprend:
- un serveur 10,
- une base de données 15 associée au serveur,
- un terminal 5, comprenant une application de communication apte à établir une connexion avec le serveur 10.

Après établissement d'une connexion entre le terminal 5 et le serveur 10 et réception d'une requête d'édition d'un contenu accessible via ce serveur, le serveur 10 envoie à l'application:
- des données de présentation, comprenant une représentation au format HTML d'une page Web, ces données étant destinées à être interprétées par l'application de communication du terminal 5 afin d'afficher cette page Web dans l'interface utilisateur de cette application,
- des instructions de programme (par exemple en langage JavaScript)
- ainsi que des données décrivant la mise en forme des pages Web à afficher (par exemple au format CSS, Cascading Style Sheets).

Les pages Web à afficher comprennent des informations statiques : textes, images, graphique, etc) qui sont destinées à être affichées sur le terminal 5 afin que l'utilisateur puisse les consulter. Ces pages comprennent des liens hypertexte permettant de déclencher l'exécution d'une ou de plusieurs fonctions d'édition du contenu d'un texte ainsi que de sauvegarder le texte modifié après édition. Les fonctions d'édition peuvent être plus ou moins riches: menus déroulants, barre d'outils, etc.

Les instructions de programme sont destinées à être interprétées et exécutées par l'application du terminal 5, en fonction d'actions déterminées de l'utilisateur au niveau de l'interface utilisateur de cette application.

L'application du terminal 5 présente un fonctionnement de type navigateur : elle affiche les pages Web reçues, active sur commande de l'utilisateur les liens hypertexte en exécutant les actions associées à ces liens et interprète et exécute les instructions de programme.

Le serveur met en oeuvre un module de traitement des fichiers textes publiés. Sur requête d'édition d'un texte en provenance d'un terminal d'un utilisateur, le module de traitement du serveur 10 transmet au navigateur une page au format HTML (HyperTexte Markup Language) contenant le texte à éditer. Le texte est présenté à l'utilisateur sous une forme éditable, c'est-à-dire permettant la modification du contenu alphanumérique de ce texte. Selon les modes de réalisation, la page HTML permet également d'effectuer des opérations de formatage du texte (police de caractères à utiliser, format des paragraphes, etc). Le contenu alphanumérique (contenu non formaté) saisi par l'utilisateur, avec les éventuelles options de mise en forme requises par l'utilisateur, est envoyé au module 10 de traitement suite à une action de l'utilisateur pour valider sa saisie.

Le module de traitement du serveur 10 génère ensuite une page HTML contenant le texte tel que modifié par l'utilisateur et mis en forme conformément aux options de mise en forme requises par cet utilisateur, en vue de la transmission de cette page à un terminal lors d'une connexion au site Wiki. Cette page HTML est également transmise au terminal de l'utilisateur ayant requis sa modification de manière à ce qu'il puisse visualiser le résultat des modifications apportées à ce texte, et le cas échéant, requérir une nouvelle modification de ce contenu ou du formatage du texte.

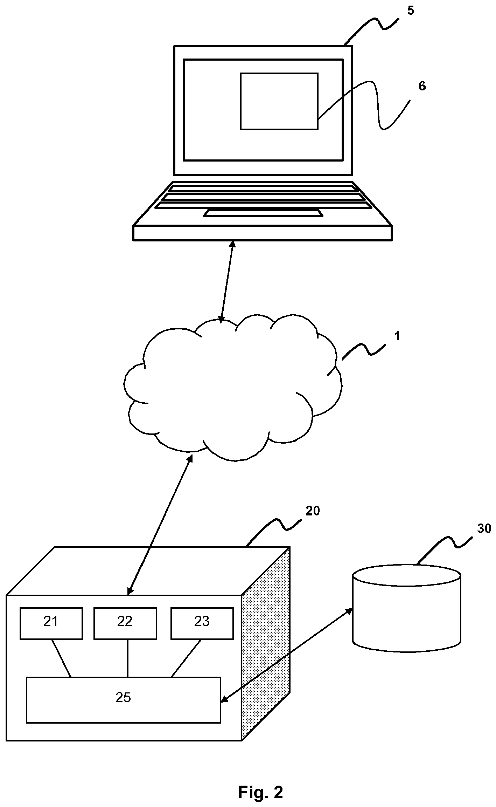

La figure 2 représente de manière schématique un système de télécommunication mettant en oeuvre un ou plusieurs sites Wiki selon l'invention.

Ce système comprend:
- un réseau 1;
- un serveur 20;
- une base de données 30 associée au serveur et gérée par ce serveur 20;
- un terminal 5, comprenant une application 6 de navigation apte à établir une connexion avec le serveur 20 à travers le réseau 1.

L'application 6 de navigation comprend des fonctionnalités de communication de base d'un navigateur Web: elle envoie des requêtes au serveur 20 et reçoit en retour une page Web à interpréter et afficher sur le terminal 5. Dans la suite de la description, on suppose que l'application 6 est un navigateur Web. L'application 6 est également conçue pour interpréter et exécuter des instructions de code de programme reçue en provenance d'un serveur.

L'invention propose un mécanisme d'édition d'objet applicable à différentes catégories d'objet. Le serveur 20 comprend dans ce but une pluralité de modules de traitement 21 à 23, chaque module de traitement étant associé à une catégorie d'objet éditable et étant conçu pour traiter les échanges de données entre le serveur 20 et le navigateur 6 qui sont effectués lors d'opérations d'édition et/ou de consultation d'un objet appartenant à cette catégorie.

Une catégorie de contenu est identifiée par exemple au moyen du standard MIME (Multipurpose Internet Mail Extensions). Ce standard définit des types d'objets (texte, image, graphique, application, ...) et des sous-types pour chaque type d'objet, un sous-type correspondant le plus souvent à un format particulier de représentation de ce type d'objet. Par exemple:
- lorsqu'un objet de type texte est au format texte brut (i.e. format alphanumérique), sa catégorie selon le standard MIME est "text/plain";
- lorsqu'un objet de type texte est au format HTML, sa catégorie selon le standard MIME est "text/html";
- lorsqu'un objet de type son est au format "Wav", sa catégorie selon le standard MIME est "audio/wav";
- lorsqu'un objet de type son est au format " MP3", sa catégorie selon le standard MIME est "audio/mpeg";
- lorsqu'un objet de graphique est au format BPMN, sa catégorie selon le standard MIME est par exemple nommée "application/processpedia", afin d'indiquer l'utilisation d'un format de description propriétaire basé sur XML;
- etc.

La base de données 30 est conçue pour mémoriser, pour chaque objet éditable, une description DDESC de cet objet en association avec une identification DTYPE de la catégorie à laquelle appartient cet objet.

La description d'un objet éditable est stockée dans la base de données sous un format de description adapté à chaque catégorie d'objet.

Dans le cas d'un objet structuré (un objet ayant une structure, par exemple un diagramme connectant différents éléments graphiques entre eux: un organigramme ou schéma d'architecture ou schéma relationnel entre entités, etc), le format de description consiste de préférence en une description en langage texte, faite par exemple au moyen du langage XML (Extensible Mark-up Langage). Une telle description est avantageusement utilisable pour différentes catégories d'objets structurés: non seulement des textes, diagrammes techniques, mais également des images vectorielles. D'autres langages appropriés sont également utilisables. Avantageusement, l'utilisation d'un langage qu'une application de navigation (navigateur Web) est capable d'interpréter permet de mettre en oeuvre l'invention sans modifier une telle application.

Dans le cas d'un objet non structuré, par exemple dans le cas d'un contenu audio ou d'une image pixel, un format de représentation binaire est utilisé et stocké dans un format de fichier approprié (JPEG, TIF, WAV...). Un format XML comprenant les données de cette représentation binaire est également utilisable.

On suppose que la description stockée dans la base de données 30 est une description en language XML. Lorsque, pour un objet structuré à intégrer dans un site Wiki, aucune représentation en langage XML n'est disponible, une description de cet objet sous un format propriétaire est convertie en description en langage XML, cette dernière étant celle stockée en base de données 30 pour publication via le site Wiki.

Dans ce but, chacun des modules 21 à 23 est apte à convertir une description d'un objet d'une catégorie donnée, du format XML vers un ou plusieurs autres formats couramment utilisés pour cette catégorie d'objet et vice-versa.

Si par exemple le module 21 est associé à la catégorie d'objet comprenant les descriptions graphiques de processus conformes au standard BPMN (Business Process Modeling Notation), ce module est apte à convertir une description BPMN en description XML et/ou, inversement, une description XML en description BPMN.

Ces fonctions de conversion sont activables également sur requête d'un utilisateur connecté au serveur 20 pour importer un objet sous un format propriétaire afin qu'il soit enregistré dans la base de données 30 ou, inversement, pour exporter vers un format propriétaire un objet stocké dans la base de données 30, afin qu'il soit éditable au moyen d'un logiciel propriétaire du terminal 5, indépendant de l'application de navigation 6.

Le serveur 20 comprend également un module 25 de traitement, dit module commun, servant d'interface entre la base de données 30 et les modules de traitement 21 à 23, dits modules spécifiques, chaque module étant propre à une catégorie d'objet éditable. Le module 25 a connaissance de la catégorie d'objet associée à chacun des modules spécifiques, chaque module spécifique 21 à 23 étant référencé auprès du module commun 25. Le module commun est ainsi en mesure de déterminer quel est le module de traitement approprié pour chaque objet selon la catégorie d'objet à laquelle cet objet appartient.

Le module commun 25 met en oeuvre les fonctions usuelles de gestion d'accès au site Wiki, notamment la réception et le traitement des requêtes d'accès aux pages du site. Le module commun 25 met également en oeuvre des fonctions de sécurité (identification et/ou authentification des utilisateurs notamment) nécessaires au contrôle de ces accès.

En outre, le module commun selon l'invention reçoit les requêtes d'édition ou de consultation d'un objet DOBJ en provenance des applications mises en oeuvre sur les terminaux. Le module commun est conçu pour, en cas de réception d'une telle requête, identifier, en fonction de la catégorie d'objet DTYPE enregistré dans la base de données 30 en association avec une description DDESC d'un objet DOBJ, quel est, parmi les modules 21 à 23, le module de traitement apte à traiter les échanges de données concernant cet objet: le module de traitement 21 à 23 identifié est alors activé par le module commun 25 en vue de la mise en oeuvre, côté serveur, des opérations nécessaires à l'édition ou la consultation de cet objet.

La gestion d'une nouvelle catégorie d'objet éditable est possible simplement par intégration d'un nouveau module de traitement, associé à cette catégorie d'objet et apte à traiter les échanges de données pour l'édition et/ou la consultation des objets de cette catégorie. Il suffit alors que ce nouveau module soit référencé auprès du module commun 25 pour que le module commun puisse activer le nouveau module en cas de requête relative à un objet appartenant à la catégorie associée au nouveau module.

Chaque module de traitement 21 à 23 est conçu pour mettre en oeuvre des fonctions de traitement de données permettant l'édition et la consultation d'un objet d'une catégorie d'objet. En alternative, deux modules distincts sont prévus: le premier pour mettre en oeuvre les fonctions permettant l'édition, le deuxième pour mettre en oeuvre les fonctions permettant la consultation d'un objet de cette catégorie.

Ces fonctions de traitement sont mises en oeuvre de la manière décrite ci-dessous.

Après établissement d'une connexion entre le terminal 5 et le serveur 20 et réception d'une requête d'édition ou de consultation d'un objet DOBJ d'une catégorie DTYPE accessible via ce serveur, le module de traitement 21 à 23 associé à la catégorie DTYPE est activé par le module commun. Le module de traitement 21 à 23 est alors conçu pour envoyer à l'application, conformément au protocole utilisé lors de la navigation sur le site Web, les données suivantes:
- des données de présentation, comprenant une représentation au format HTML d'une page Web;
- des données (par exemple au format CSS) définissant une mise en forme de page Web à appliquer lors de l'affichage de la page Web fournie; et
- des instructions de programme DINST (par exemple au format JavaScript) destinées à être interprétées et exécutées par ladite application 6.

Les instructions de programme DINST sont conçues pour télécharger à partir du serveur 20 et interpréter une description DDESC1 de l'objet DOBJ à éditer pour produire une représentation graphique DREPR1 dudit objet, destinée à être affichée dans l'interface utilisateur de l'application 6.

Les instructions de programme DINST sont également conçues pour mettre en oeuvre une ou plusieurs fonctions d'édition et de consultation de l'objet DOBJ, susceptibles d'entraîner une modification de l'objet DOBJ.

La description DDESC1 de l'objet DOBJ à éditer est une description en langage texte (par exemple XML) ou bien code binaire. Elle est transmise à l'application 6 soit dans le format (par exemple XML) dans laquelle cette description est stockée dans la base de données 30, soit dans un format optimisé (par exemple JSON) permettant une interprétation rapide de cette description par l'application 6. La représentation graphique DREPR1 de l'objet obtenue après interprétation de la description DDESC1 est combinée aux données de présentation reçues du serveur afin de produire la page Web qui sera affichée dans l'interface utilisateur de l'application 6.

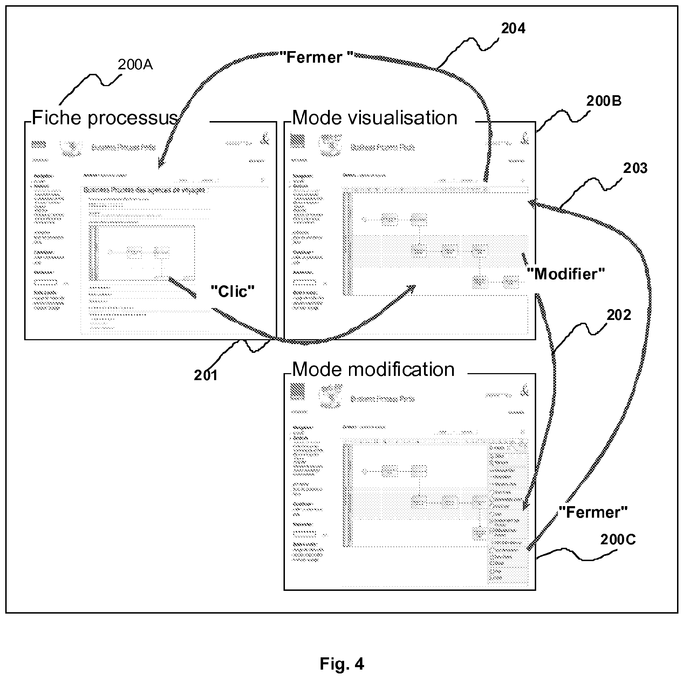

La page Web affichée a par exemple l'apparence de la page Web 200B représentée à la figure 4. Cette page Web comprend au moins un élément d'interface utilisateur (menu, bouton, lien hypertexte ou autre) pour, en cas d'action prédéfinie de l'utilisateur sur cet élément, déclencher l'exécution d'un processus d'édition d'un objet représenté dans cette page Web 200B.

Les éléments d'interface utilisateur permettant l'édition d'un objet proviennent de deux sources possibles :
- soit ils sont créés au moyen des instructions de programme DINST, qui, dans ce cas comprennent des instructions de création d'éléments d'interface utilisateur,
- soit les données de présentation initialement reçues du serveur comprennent des données destinées à être interprétées par le navigateur pour présenter à l'utilisateur ces éléments d'interface utilisateur.

L'interface utilisateur utilisée pour l'édition d'un objet a par exemple l'apparence de la page Web 200C représentée à la figure 4 : elle comprend des menus, boutons, liens ou autres éléments d'interface utilisateur permettant l'activation des fonctions d'édition disponibles.

Selon un mode de réalisation, la page Web 200C résulte d'une modification partielle locale de la page Web 200B : dans ce cas les instructions de programme DINST comprennent uniquement les données d'interface utilisateur destinées à être interprétées par le navigateur pour modifier la page Web200B de la manière requise.

Les fonctions d'édition définies dans les instructions de programme DINST sont adaptées à l'édition d'un objet d'une catégorie donnée. Comme indiqué en introduction, l'invention a pour but de proposer une solution d'édition (création, modification, etc) d'un objet graphique, c'est-à-dire de la représentation graphique d'un objet quelconque (par exemple, la représentation graphique d'un contenu sonore).

Par exemple, lorsque l'objet est un diagramme représentant sous forme graphique un processus technique, les fonctions d'édition incluses dans les instructions de programme DINST transmises par le module de traitement correspondant sont par exemple:
- des fonctions de dessin de nouveaux éléments graphiques du diagramme;
- des fonctions d'édition d'un élément graphique du diagramme, par exemple changement de la forme de cet élément, de sa taille, de sa couleur;
- des fonctions de déplacement ou de suppression d'un élément graphique du diagramme;
- des fonctions d'ajout de texte ou de correction d'un texte associé à un élément graphique du diagramme;
- des fonctions d'ajout de texte ou de correction d'un texte associé au diagramme, par exemple de sa version;
- etc;

Dans le cas d'exemple d'un objet sous forme de diagramme représentatif d'un processus technique (au format BPMN, par exemple), une fonction de dessin d'un élément est par exemple le tracé d'une flèche entre deux points du diagramme. Les instructions de programme DINST correspondantes sont par exemple les suivantes (cas du langage JavaScript):

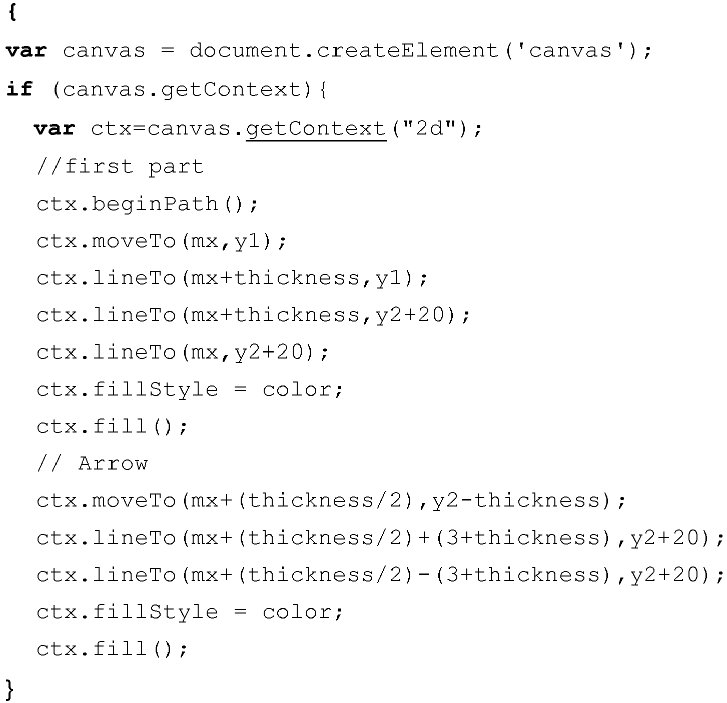

L'exécution de cette fonction entraîne une modification de la représentation graphique de l'objet affichée sur l'écran, par activation de fonctions de tracé (fonctions "moveTo", "lineTo", "fillStyle" et "fill").

Comme illustré ci-dessus, les fonctions d'édition comprendront notamment:
- des fonctions de création de nouveaux éléments graphiques de la représentation graphique;
- des fonctions d'édition d'un élément graphique de la représentation graphique, par exemple changement de la forme de cet élément, de sa taille, de sa couleur;
- des fonctions de déplacement ou de suppression d'un élément graphique de de la représentation graphique;
- des fonctions d'ajout de texte ou de correction d'un texte associé à un élément graphique de la représentation graphique;
- des fonctions d'ajout de texte ou de correction d'un texte associé à la représentation graphique, par exemple de sa version;
- etc;

Les instructions de programme DINST comprennent des données d'interface utilisateur définissant des éléments d'interface utilisateur nécessaire à l'édition d'un objet. Ces éléments d'interface utilisateur sont présentés à l'utilisateur dans une page Web est affichée par l'application 6, de manière à respecter le mécanisme de gestion d'interface utilisateur propre à un navigateur.

A titre d'exemple, la figure 4 comprend une représentation d'une page Web 200C présentant à l'utilisateur une palette d'outils, sous forme d'icônes, menus et boutons, etc, permettant d'activer différentes fonctions d'édition d'un objet graphique. Les instructions de programme DINST reçues et la page Web 200C sont conçues de telle sorte que le navigateur déclenche l'exécution d'une fonction d'édition en cas d'action de l'utilisateur opérée au niveau de l'interface utilisateur sur un élément graphique associé à cette fonction.

Lorsqu'une fonction d'édition entraînant la modification de l'objet DOBJ est exécutée, cette modification est matérialisée par affichage dans l'interface utilisateur du navigateur d'une représentation graphique modifiée de l'objet tel que modifié.

De manière générale, les instructions de programme DINST sont conçues pour gérer toutes les entrées / sorties au niveau de l'interface utilisateur de l'application 6: c'est-à-dire aussi bien la prise en compte des actions de l'utilisateur (saisie de données dans un champ texte, activation de touches particulières du clavier, actions entrées au moyen d'un organe de pointage de type souris ou autre, etc) que la mise en oeuvre des modifications d'affichage - notamment de la représentation graphique DREPR1 de l'objet DOBJ - prévues en réponse à ces actions. Toutes les entrées / sorties sont donc gérées par l'application 6 au moyen des instructions de programme DINST sans qu'il soit nécessaire de faire appel à une autre application logicielle.

Plus précisément, les instructions de programme DINST sont conçues pour, suite à l'exécution d'au moins une fonction d'édition ayant entraîné au moins une modification de l'objet DOBJ, provoquer la mise à jour par l'application 6 de la représentation graphique DREPR1 de l'objet DOBJ telle qu'affichée dans l'interface utilisateur de l'application 6 sur le terminal 5. L'opération de mise à jour de la représentation graphique DREPR1 est effectuée de préférence après chaque exécution d'une fonction d'édition ayant entrainé une modification de l'objet. Il en résulte une représentation graphique modifiée DREPR2.

Les instructions de programme DINST sont conçues pour mettre à jour et/ou sauvegarder les données descriptives DDESC1 de l'objet DOBJ tel que modifié après édition. La mise à jour des données descriptives DDESC1 de l'objet DOBJ est effectuée de préférence sur demande de l'utilisateur, lorsque celui-ci demande une sauvegarde de l'objet qu'il vient d'éditer, mais peut aussi être fait automatiquement et soit de manière périodique, soit à chaque modification.

Selon une première variante de réalisation, la mise à jour est effectuée par l'application 6. Les instructions de programme DINST comportent dans ce but des instructions pour mettre à jour la description DDESC1 de l'objet DOBJ modifié après édition par conversion de données de description de la représentation graphique DREPR2 affichée pour l'objet DOBJ modifié et génération de données de description DDESC2 modifiées, les données DDESC2 étant au même format que les données descriptives initiales DDESC1 (format XML, par exemple).

Dans cette première variante, les instructions de programme DINST comportent également des instructions pour transmettre, conformément au protocole utilisé lors de la navigation sur le site Web, au module de traitement 21 à 23 considéré, les données descriptives DDESC2 mises à jour telles que générées par l'application 6.

Le module de traitement considéré est conçu pour, à réception de données descriptives DDESC2 d'un objet modifié, transférer ces données descriptives DDESC2 reçues au module commun 25 pour mise à jour des données descriptives DDESC1 stockées dans la base de données 30, de manière à ce que ces données mises à jour soient celles transmises à un terminal lors d'une requête ultérieure d'accès à cet objet émise par ce terminal.

Selon une deuxième variante de réalisation, la mise à jour est effectuée par le module de traitement 21 à 24 du serveur 20 qui est associé à la catégorie d'objet à laquelle appartient l'objet DOBJ modifié. Dans cette deuxième variante, des données décrivant certains des éléments graphiques composant la représentation graphique DREPR2 de l'objet DOBJ, telle qu'affichée dans l'interface utilisateur de l'application 6 après modification de l'objet DOBJ, sont transmises au module de traitement considéré.

Dans le cas d'exemple d'une modification de la représentation graphique DREPR1 par tracé de flèche, les coordonnées de la flèche tracée sont transmises au serveur accompagnées d'un code identifiant l'élément graphique de type "flèche" et de paramètres de formatage de cet élément graphique. Les données décrivant les autres éléments graphiques composant la représentation graphique modifiée DREPR2 de l'objet DOBJ sont transmises de préférence simultanément.

Le module de traitement considéré est conçu pour convertir les données de description de la représentation graphique modifiée DREPR2 en données de description DDESC2 de l'objet DOBJ. Dans cette deuxième variante, les données DDESC2 sont également au même format que les données descriptives initiales DDESC1 (format XML, par exemple)

Le module de traitement considéré est conçu pour transférer ensuite ces données descriptives DDESC2 modifiées au module commun 25 pour mise à jour des données descriptives DDESC1 stockées dans la base de données 30, de manière à ce que ces données mises à jour soient celles transmises à un terminal lors d'une requête ultérieure d'accès à cet objet émise par ce terminal.

Dans le mode de réalisation qui vient d'être décrit, toute application 6 comprenant des fonctionnalités d'un navigateur Web est susceptible d'être utilisée pour communiquer avec le serveur 20 sans qu'il soit nécessaire de la modifier ou de la compléter par un module logiciel complémentaire de type "plug-in". En effet, la gestion des différents catégories d'objets est mise en oeuvre par le serveur au moyen des modules 21 à 25 et les fonctions d'édition et de consultation d'un objet exécutées par l'application sont exécutées à partir des instructions de programme DINST reçues du module de traitement 21 à 23 associé au catégorie d'objet considéré, sans qu'il soit nécessaire de charger ou d'installer un autre programme ou d'effectuer une quelconque configuration.

Selon un autre mode de réalisation, une mise à jour logicielle de l'application 6 sera effectuée à partir du serveur 20, par installation d'un plug-in de l'application 6 ou d'une application Flash permettant l'exécution de fonctions d'édition identiques à celles décrites pour les instructions de programme transmises et interprétées.

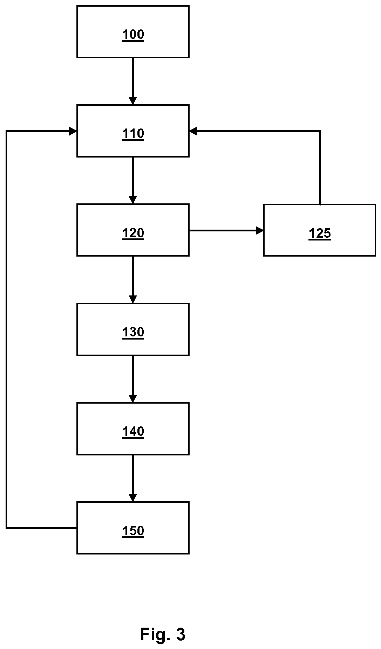

Un mode de réalisation du procédé selon l'invention est décrit par référence aux figures 3 et 4.

A l'étape 100, un utilisateur établit, entre son terminal 5 et le serveur 20, au moyen d'une application une liaison de communication convenant pour une navigation sur le Web, et notamment sur le site Web géré par le serveur 20. Cette application est typiquement un navigateur Internet. Une page Web d'un site Wiki est affichée dans l'interface utilisateur du navigateur. Cette page a par l'exemple l'apparence de la page 200A représentée à la figure 4: dans l'exemple décrit ici, la page contient une fiche synthétique descriptive d'un processus, conformément au standard BPMN.

A l'étape 110, l'utilisateur demande à visualiser une représentation graphique complète du processus et clique sur la fiche descriptive. En réponse, et sous réserve que l'utilisateur possède les droits nécessaires, une nouvelle page Web ayant l'apparence de la page 200B est affichée par le navigateur à partir de données descriptives en langage XML fournies par le module commun 25 du serveur 20 et interprétées par le navigateur pour produire une représentation graphique affichable du processus. Dans le cas d'exemple décrit, cette page contient une représentation graphique développée du processus qui est conforme au standard BPMN.

A l'étape 110, l'utilisateur, en cliquant sur cette représentation graphique, demande à éditer l'objet graphique constitué par la représentation graphique développée du processus, ce qui provoque l'envoi d'une requête d'édition au module commun 25 du serveur 20.

A l'étape 120, le module commun 25 détermine à partir des informations stockées dans la base de données 30 quelle est la catégorie de l'objet pour lequel une requête d'édition a été reçue et s'il existe parmi les modules de traitement 21 à 23 un module qui soit associé à cette catégorie d'objet. Dans l'affirmative, l'étape 130 est exécutée. Dans le cas contraire, aucun module de traitement permettant l'édition de cette catégorie d'objet n'étant disponible, l'étape 125 est exécutée.

A l'étape 130, le module commun 25 déclenche le module de traitement associé à la catégorie d'objet à éditer, par exemple le module 21. Le module 21 transmet alors au navigateur une page Web à afficher, ayant l'apparence de la page 200C représentée à la figure 4 et déjà décrite, comprenant des données descriptives DDESC1 dudit objet, ainsi que des instructions de programme DINST pour une exécution par le navigateur de fonctions d'édition de l'objet considéré, c'est-à-dire de l'objet graphique constitué par la représentation graphique du processus.

A l'étape 140, l'utilisateur procède à l'édition de l'objet graphique. Puis, lorsque l'utilisateur a terminé l'édition de cet objet graphique, il clique sur une icône, une case de menu ou un lien hypertexte ou encore utilise une combinaison de touches clavier (par exemple CTRL-S ou ALT-S) pour déclencher la sauvegarde de l'objet graphique. Ceci provoque l'envoi par le navigateur au module 21 des données descriptives en langage XML de l'objet modifié (soit une description modifiée DDESC2, remplaçant la description DDESC1, soit des données décrivant certains des éléments graphiques composant la représentation graphique DREPR2 de l'objet DOBJ). Une nouvelle page Web est affichée, ayant l'apparence de la page 200B représentée à la figure 4 et comprenant une représentation de l'objet tel que modifié.

A l'étape 150, le module de traitement 21, à réception des données descriptives de l'objet modifié, les transfère au module commun 25 pour archivage dans la base de données 30.

A l'étape 125, exécutée suite à l'étape 120, le module commun 25 renvoie une réponse sous forme d'une page Web comprenant une information quant à l'impossibilité d'éditer l'objet dans le navigateur et proposant à l'utilisateur de télécharger un fichier de description de cet objet. En cas d'accord de l'utilisateur une description, non pas en XML, mais dans un format de fichier, propre à la catégorie d'objet à laquelle appartient cet objet, est proposée au téléchargement.

L'utilisateur peut alors modifier ce fichier s'il dispose du logiciel approprié puis procéder à la mise à jour du site Wiki par téléchargement vers le site Wiki du fichier modifié. A réception du fichier modifié par le serveur 20, le module associé effectue la conversion inverse, c'est-à-dire du format propre à la catégorie d'objet vers le format XML pour mise à jour de la base de données 30 avec une description modifiée au format XML.

L'étape 110 est exécutée à nouveau après l'étape 125 ou après l'étape 150, les étapes 110 à 150 étant répétée à chaque requête d'édition d'un objet.

L'invention est applicable aussi bien à la mise à jour d'un objet existant qu'à la création d'un nouvel objet : dans ce dernier cas l'objet édité selon l'invention est un objet "vierge" ou un nouvel objet créé à partir d'un modèle d'objet, selon la logique connue pour la création d'un nouveau document.

L'invention est applicable à la mise en oeuvre de processus collaboratifs entre entreprises ou entre utilisateur ayant à partager l'édition de documents multimédia (spécifications techniques, documentations commerciales, compositions artistiques, etc) intégrant des objets de différents catégories (texte, images, graphismes, etc): par exemple
- une composition collaborative d'un objet graphique représentant une partition musicale, chaque utilisateur compositeur pouvant modifier les éléments graphiques de cette partition (note, clef, accord...) et sauvegarder la nouvelle partition graphique au sein de l'espace de stockage associé à un site Wiki;
- une édition d'un document technique comprenant un diagramme conforme à BPMN, UML ou autre standard de description de processus;
- une édition partagée d'un objet graphique représentant une carte routière par différents acteurs ayant accès à des informations sur un des lieux géographiques représentés par cette carte.

## Revendications

1. Procédé d'édition d'un objet (DOBJT) représenté dans une page d'un site Web, le procédé comprenant,
- une étape d'établissement, entre un serveur et une application mise en oeuvre par un terminal, d'une liaison de communication pour une navigation sur ledit site Web,
- une étape d'envoi, par le serveur à destination de ladite application, via ladite liaison, de premières données (DDESC1) de description dudit objet pour un affichage d'une représentation graphique (DREPR1) dudit objet dans une interface utilisateur de ladite application et
**caractérisé en ce que** lors de ladite étape d'envoi est envoyé également via ladite liaison un jeu d'instructions de programme (DINST), conçues pour une exécution par ladite application de fonctions d'édition de ladite représentation graphique,
et **en ce que** le jeu d'instructions envoyé est propre à une catégorie d'objet à laquelle appartient ledit objet.

2. Procédé selon la revendication 1, comprenant une étape de réception via ladite liaison, par le serveur en provenance de l'application, de deuxièmes données de description relatives audit objet et générées au moyen desdites instructions de programme suite à une exécution d'au moins une fonction d'édition dudit objet déclenchée par un utilisateur dudit terminal.

3. Procédé selon la revendication 1, dans lequel les deuxièmes données de description sont des données de description (DDESC2) dudit objet ou des données de description d'éléments graphiques constituant la représentation (DREPR2) dudit objet.

4. Procédé selon la revendication 1, comprenant
- une étape de stockage de données descriptives dudit objet, destinées à être transmises à un terminal requérant un affichage d'une page Web comprenant une représentation dudit objet,
- une étape de mise à jour, des données descriptives stockées par ledit serveur à partir des deuxièmes données de description.

5. Procédé selon la revendication 1, comprenant une étape d'identification d'une catégorie d'objet à laquelle ledit objet appartient à partir d'une identification de catégorie mémorisée par ledit serveur en association avec des données de description dudit objet, un jeu d'instructions de programme propre à la catégorie d'objet identifiée étant transmis lors de ladite étape d'envoi.

6. Procédé selon la revendication 1, dans lequel lesdites premières données de description sont dans un format interprétable par une application convenant pour une navigation sur le Web.

7. Serveur (20) pour la mise en oeuvre d'un procédé d'édition d'un objet (DOBJT) représenté dans une page d'un site Web, le serveur comprenant:
- des moyens d'établissement, avec une application mise en oeuvre par un terminal, d'une liaison de communication pour une navigation sur ledit site Web,
- des moyens d'envoi à l'application, via ladite liaison, de premières données (DDESC1) de description dudit objet pour un affichage d'une représentation graphique (DREPR1) dudit objet dans une interface utilisateur de ladite application et
**caractérisé en ce que** lors de ladite étape d'envoi est envoyé également via ladite liaison un jeu d'instructions de programme (DINST), propre à une catégorie d'objet à laquelle ledit objet appartient, lesdites instructions étant conçues pour une exécution par ladite application de fonctions d'édition de ladite représentation graphique,
et **en ce que** le jeu d'instructions envoyé est propre à une catégorie d'objet à laquelle appartient ledit objet.

8. Serveur (20) selon la revendication 7, comprenant des moyens de réception en provenance de l'application, via ladite liaison, de deuxièmes données de description relatives audit objet et générées au moyen desdites instructions de programme suite à une exécution d'au moins une fonction d'édition dudit objet déclenchée par un utilisateur dudit terminal.

9. Serveur (20) selon la revendication 8, comprenant
- des moyens de stockage de données descriptives (DDESC1) dudit objet destinées à être transmises à un terminal (5) requérant un affichage d'une page Web comprenant une représentation dudit objet,
- des moyens de mise à jour, des données descriptives stockées par ledit serveur à partir des deuxièmes données de description reçues.

10. Serveur (20) selon la revendication 8, comprenant des moyens d'identification d'une catégorie d'objet à laquelle ledit objet appartient à partir d'une identification de catégorie mémorisée en association avec lesdites données descriptives, un jeu d'instructions de programme propre à la catégorie d'objet identifiée étant transmis par lesdits moyens d'envoi.

11. Programme informatique comprenant des instructions logicielles pour la mise en oeuvre d'un procédé selon l'une des revendications 1 à 5 lorsque ledit programme est exécuté par un processeur de données.

12. Support d'enregistrement lisible par un processeur de données sur lequel est enregistré un programme comprenant des instructions de code de programme pour l'exécution des étapes d'un procédé selon l'une des revendications 1 à 5.

## Patentansprüche

1. Verfahren zur Editierung eines Objekts (DOBJT), das auf einer Seite einer Website dargestellt ist, wobei das Verfahren umfasst:
- einen Schritt des Aufbaus, zwischen einem Server und einer von einem Endgerät ausgeführten Anwendung, einer Kommunikationsverbindung für eine Navigation auf der Website,
- einen Schritt des Sendens, durch den Server an die Anwendung über die Verbindung, erster Daten (DDESC1) zur Beschreibung des Objekts für eine Anzeige einer graphischen Darstellung (DREPR1) des Objekts in einer Benutzerschnittstelle der Anwendung, und
**dadurch gekennzeichnet, dass** im Schritt des Sendens über die Verbindung auch ein Satz von Programmanweisungen (DINST) gesendet wird, die für eine Ausführung, durch die Anwendung, von Funktionen zur Editierung der graphischen Darstellung ausgelegt sind,
und dadurch, dass der gesendete Satz von Programmanweisungen für eine Objektkategorie, der das Objekt angehört, spezifisch ist.

2. Verfahren nach Anspruch 1, welches einen Schritt des Empfangs, durch den Server von der Anwendung über die Verbindung, zweiter Beschreibungsdaten umfasst, die sich auf das Objekt beziehen und mittels der Programmanweisungen im Anschluss an eine Ausführung wenigstens einer Funktion zur Editierung des Objekts, die von einem Benutzer des Endgerätes ausgelöst wurde, erzeugt wurden.

3. Verfahren nach Anspruch 1, wobei die zweiten Beschreibungsdaten Daten zur Beschreibung (DDESC2) des Objekts oder Daten zur Beschreibung graphischer Elemente, welche die Darstellung (DREPR2) des Objekts bilden, sind.

4. Verfahren nach Anspruch 1, welches umfasst:
- einen Schritt der Speicherung deskriptiver Daten des Objekts, die dazu bestimmt sind, zu einem Endgerät übertragen zu werden, das eine Anzeige einer Webseite anfordert, die eine Darstellung des Objekts umfasst,
- einen Schritt der Aktualisierung der von dem Server gespeicherten deskriptiven Daten mittels der zweiten Beschreibungsdaten.

5. Verfahren nach Anspruch 1, welches einen Schritt der Identifizierung einer Objektkategorie, der das Objekt angehört, anhand einer Kategorieidentifikation, die durch den Server in Verbindung mit Beschreibungsdaten des Objekts gespeichert ist, umfasst, wobei ein Satz von Programmanweisungen, der für die identifizierte Objektkategorie spezifisch ist, im Schritt des Sendens übertragen wird.

6. Verfahren nach Anspruch 1, wobei die ersten Beschreibungsdaten in einem Format vorliegen, das durch eine Anwendung interpretierbar ist, die für eine Navigation im Web geeignet ist.

7. Server (20) zur Durchführung eines Verfahrens zur Editierung eines Objekts (DOBJT), das auf einer Seite einer Website dargestellt ist, wobei der Server umfasst:
- Mittel zum Aufbau, mit einer von einem Endgerät ausgeführten Anwendung, einer Kommunikationsverbindung für eine Navigation auf der Website,
- Mittel zum Senden, an die Anwendung über die Verbindung, erster Daten (DDESC1) zur Beschreibung des Objekts für eine Anzeige einer graphischen Darstellung (DREPR1) des Objekts in einer Benutzerschnittstelle der Anwendung, und
**dadurch gekennzeichnet, dass** die Mittel zum Senden dafür ausgelegt sind, über die Verbindung einen Satz von Programmanweisungen (DINST) zu senden, der für eine Objektkategorie, der das Objekt angehört, spezifisch ist, wobei die Anweisungen für eine Ausführung, durch die Anwendung, von Funktionen zur Editierung der graphischen Darstellung ausgelegt sind,
und dadurch, dass der gesendete Satz von Programmanweisungen für eine Objektkategorie, der das Objekt angehört, spezifisch ist.

8. Server (20) nach Anspruch 7, welcher Mittel zum Empfang, von der Anwendung über die Verbindung, zweiter Beschreibungsdaten umfasst, die sich auf das Objekt beziehen und mittels der Programmanweisungen im Anschluss an eine Ausführung wenigstens einer Funktion zur Editierung des Objekts, die von einem Benutzer des Endgerätes ausgelöst wurde, erzeugt wurden.

9. Server (20) nach Anspruch 8, welcher umfasst:
- Mittel zur Speicherung deskriptiver Daten (DDESC1) des Objekts, die dazu bestimmt sind, zu einem Endgerät (5) übertragen zu werden, das eine Anzeige einer Webseite anfordert, die eine Darstellung des Objekts umfasst,
- Mittel zur Aktualisierung der von dem Server gespeicherten deskriptiven Daten mittels der empfangenen zweiten Beschreibungsdaten.

10. Server (20) nach Anspruch 8, welcher Mittel zur Identifizierung einer Objektkategorie, der das Objekt angehört, anhand einer Kategorieidentifikation, die in Verbindung mit den deskriptiven Daten gespeichert ist, umfasst, wobei ein Satz von Programmanweisungen, der für die identifizierte Objektkategorie spezifisch ist, von den Mitteln zum Senden übertragen wird.

11. Computerprogramm, welches Software-Anweisungen für die Durchführung eines Verfahrens nach einem der Ansprüche 1 bis 5, wenn das Programm von einem Datenprozessor ausgeführt wird, umfasst.

12. Aufzeichnungsmedium, das von einem Datenprozessor lesbar ist und auf dem ein Programm aufgezeichnet ist, das Programmcodeanweisungen zur Ausführung der Schritte eines Verfahrens nach einem der Ansprüche 1 bis 5 umfasst.

## Claims

1. Method for editing an object (DOBJT) represented in a page of a Web site, the method comprising,
- a step of establishing, between a server and an application implemented by a terminal, a communication link for browsing said Web site,
- a step of dispatching, by the server to said application, via said link, first description data (DDESC1) describing said object for a display of a graphical representation (DREPR1) of said object in a user interface of said application and
**characterized in that**, during said dispatching steps, a suite of program instructions (DINST) is also dispatched via said link, said instructions being designed for an execution by said application of functions for editing said graphical representation,
and **in that** the dispatched suite of instructions is specific to a category of object to which said object belongs.

2. Method according to Claim 1, comprising a step of receiving via said link, by the server from the application, second description data relating to said object and generated by means of said program instructions following an execution of at least one function for editing said object, triggered by a user of said terminal.

3. Method according to Claim 1, in which the second description data are description data (DDESC2) of said object or description data describing graphical elements constituting the representation (DREPR2) of said object.

4. Method according to Claim 1, comprising
- a step of storing data descriptive of said object and intended to be transmitted to a terminal requiring a display of a Web page comprising a representation of said object,
- a step of updating the descriptive data stored by said server on the basis of the second description data.

5. Method according to Claim 1, comprising a step of identifying a category of object to which said object belongs on the basis of a category identification stored by said server in association with data descriptive of said object, a suite of program instructions specific to the identified category of object being transmitted during said dispatching step.

6. Method according to Claim 1, in which said first description data are in a format interpretable by an application suitable for browsing the Web.

7. Server (20) for the implementation of a method for editing an object (DOBJT) represented in a page of a Web site, the server comprising:
- means for establishing, with an application implemented by a terminal, a communication link for browsing said Web site,
- means for dispatching to the application, via said link, first description data (DDESC1) describing said object for a display of a graphical representation (DREPR1) of said object in a user interface of said application and
**characterized in that** said dispatching means are designed to dispatch, via said link, a suite of program instructions (DINST), specific to a category of object to which said object belongs, said instructions being designed for an execution by said application of functions for editing said graphical representation,
and **in that** the dispatched suite of instructions is specific to a category of object to which said object belongs.

8. Server (20) according to Claim 7, comprising means for receiving from the application, via said link, second description data relating to said object and generated by means of said program instructions following an execution of at least one function for editing said object, triggered by a user of said terminal.

9. Server (20) according to Claim 8, comprising
- means for storing descriptive data (DDESC1) of said object intended to be transmitted to a terminal (5) requiring a display of a Web page comprising a representation of said object,
- means for updating the descriptive data stored by said server on the basis of the second description data received.

10. Server (20) according to Claim 8, comprising means for identifying a category of object to which said object belongs on the basis of a category identification stored in association with said descriptive data, a suite of program instructions which is specific to the identified category of object being transmitted by said dispatching means.

11. Computer program comprising software instructions for the implementation of a method according to one of Claims 1 to 5 when said program is executed by a data processor.

12. Recording medium readable by a data processor on which is recorded a program comprising program code instructions for executing the steps of a method according to one of Claims 1 to 5.
